# EUROPEAN PATENT SPECIFICATION

(11) **EP 1 650 989 B1**
(45) Date of publication and mention of the grant of the patent: **03.01.2007**
(21) Application number: 04292507.3
(22) Date of filing: 21.10.2004
(51) Int. Cl.: H04Q 7/22, H04L 12/56

(54) **Method for providing an MBMS service in a wireless communication system**
Verfahren zum Bereitstellen eines MBMS-Dienstes in einem drahtlosen Kommunikationssystem
Procédé pour fournir un service MBMS dans un réseau de communication sans fil

(43) Date of publication of application: 26.04.2006
(73) Proprietor: ALCATEL, 75008 Paris (FR)
(72) Inventor: Barth, Ulrich, 70825 Münchingen (DE); Zeller, Dietrich, 71067 Sindelfingen (DE)
(74) Representative: Brose, Gerhard

(56) References cited:
- EP-A- 1 309 213
- US-A1- 2003 119 452

## Description

The present invention relates to wireless communication systems, and more particularly, to a system and a method for providing a multimedia broadcast/multicast service (MBMS).

The third generation (3G) evolution of Global Systems for Mobile communications (GSM) networks, commonly known as Universal Mobile Telecommunications Systems (UMTS), introduces multicast and broadcast functions in the core and radio access network. In the 3rd Generation Partnership Project (3GPP), which develops such UMTS standards, the concept is called multimedia multicast / broadcast mode service (MBMS).

The MBMS is a unidirectional point to multipoint bearer service in which the same data is transmitted from a single source entity, e.g. a Broadcast-Multicast service center, through a mobile network and a radio air interface, to multiple recipients, e.g. user terminals or equipments (UEs). These services will typically be in the form of streaming video and audio, thus requiring a large quantity of transmission resources.

Known patent applications which deal with MBMS service are US 2003/0119452 A1 and EP 1 309 213 A1. The first is directed to a method for controlling transmission power of a plurality of UEs by a Node B, and the latter addresses problems concerned with charging.

It has to be considered that the number of users or UEs requesting a specific MBMS service in a cell may vary from zero to a very high number, and that the radio air interface resources shall be used in an efficient manner. This means that in cells with no MBMS users, no MBMS contents shall be transmitted, and in cells with several MBMS users a transmission technique or mode has to be used which is suitable to serve the set of users in an efficient way.

Various types of transmission modes can be used for MBMS radio air interface data delivery between a base station and a plurality of UEs being served by that base station in a cell area. These transmission modes may include "point to point" transmission on "dedicated transport channels", whereby the base station establishes a dedicated transport channel with each UE requesting the MBMS content and transmits the data on that channel, or "point to multipoint" transmission on a "common transport channel", whereby the base station transmits the data on a single common transport channel which is received by all the UEs in the cell requesting that MBMS service.

When providing an MBMS service to a plurality of UEs in a cell using point to multipoint transmission on a common transport channel, the base station saves downlink channel and code resources but must set the transmission power of the common transport channel high enough so that it can cover the entire cell region. This has the disadvantage that the power level is unnecessarily high for most of the UEs and it also results in interference. There has been also proposed to develop methods to control the transmission power of the common transport channel and set it to a level so that the UE requesting the MBMS service furthest from the base station is able to receive the transmission, but not covering areas where no users are interested in the service contents. However, this does not solve the power coverage problems when a UE requesting the MBMS service is located in the cell border.

Providing an MBMS service using a point to point transmission on dedicated channels on the other hand allows the base station to control the transmission power of the dedicated transport channels more efficiently, but this implies also an increase in the number of downlink channels and code resources to be assigned to the UEs, causing a reduction in efficiency of transmission resources.

An adaptive MBMS service transmission technique, according to the number of MBMS users desiring to receive a MBMS service in a cell, has been also proposed. When the number of UEs requesting an MBMS service within the same cell is less than a preset number, the MBMS service is provided using point to point transmission on dedicated transport channels, and when the number of UEs receiving an MBMS service within the same cell becomes greater than a preset number such MBMS service is provided using point to multipoint transmission on a common transport channel. However this solution still wastes air interface radio transmission power resources when using a point to multipoint transmission mode on a common transport channel to deliver MBMS service data from the base station to all the UEs in a cell requesting an MBMS service.

It is the object of the invention to solve the aforesaid technical problems and provide an improved MBMS service provision method in order to increase the efficiency of use of the radio air interface resources available in a cell.

The object is achieved by a method for providing an MBMS service in a wireless communications system according to claim 1, a network element of a mobile network, such as a base station or the like, according to claim 5 and a communications network according to claim 9.

The basic idea of the invention is to dynamically adapt the configuration of the MBMS service transmission mode depending on the location, and the number associated with it, of MBMS users in a cell. The invention takes advantage from the observation that generally only very few MBMS users are located at the cell border area. Consequently, the invention increases the efficiency of the air interface cell radio resource usage in cases where many MBMS users desiring to receive a determined MBMS service are located at the cell inner area, close to the base station, and few MBMS users requesting such MBMS service are located at the cell border area.

According to a first preferred embodiment of the invention, the MBMS service is provided using a point to multipoint on a common transport channel transmission mode with a preset amount of transmission power, enough to cover the UEs located in a certain cell inner area (depending on the transmission power), and using point to point on dedicated channels transmission mode for the UEs located outside such cell inner area or point to multipoint on a common transport channel transmission coverage area.

According to a second preferred embodiment of the invention, the size of the point to multipoint on a common transport channel coverage area is increased depending on the distribution, and associated number, of UEs requesting the MBMS service in a cell. The MBMS service is provided using point to multipoint transmission on a common transport channel with a preset amount of transmission power for the common transport channel, enough to cover the UEs located in a certain cell inner area or point to multipoint coverage area, and using point to point transmission on dedicated channels for the UEs located outside such cell inner area or point to multipoint coverage area. Further, when the mobile network detects that the number of UEs requesting the MBMS service and located outside the point to multipoint on a common channel transmission coverage area increases over a threshold value, the base station increases the transmission power for the common transport channel a certain amount in order to extend the point to multipoint on a common transport channel transmission coverage area. This increase in transmission power for the common transport channel is done in successive steps until the number of UEs located outside such point to multipoint on a common transport channel coverage area decreases below that threshold value.

Advantageous configurations of the invention emerge from the dependent claims, the following description and the drawings. For example, it is seen advantageous that, by using the proposed invention, transmission power and channel resources can be reduced in the cell, thus reducing interference between UEs and increasing system capacity. The gains in radio resource usage efficiency provided by the invention will allow to offer more MBMS services in parallel at a time in a cell or to reduce the capacity degradations MBMS will cause to non MBMS services. Further, the invention allows to take benefit of soft handover gains for MBMS, that is, transmission power for point to point communication on dedicated channels for UEs located in cell border areas can be reduced due to the fact that these UEs typically enter in a soft handover state.

An embodiment example of the invention is now explained with the aid of Figures 1 to 6.
Fig. 1 illustrates a block diagram of a conventional wireless communications system including a mobile network communicating with a plurality of UEs.
Fig. 2 is a flow chart illustrating an operating process of a mobile network for providing an MBMS service according to a first embodiment of the invention.
Fig. 3 schematically illustrates a first example of an MBMS service provision in a cell according to a first embodiment of the invention.
Fig. 4 schematically illustrates a second example of an MBMS service provision in a cell according to a first embodiment of the invention.
Fig. 5 is a flow chart illustrating an operating process of a mobile network for providing an MBMS service according to a second embodiment of the invention.
Fig. 6 schematically illustrates an example of an MBMS service provision in a cell according to a second embodiment of the invention.

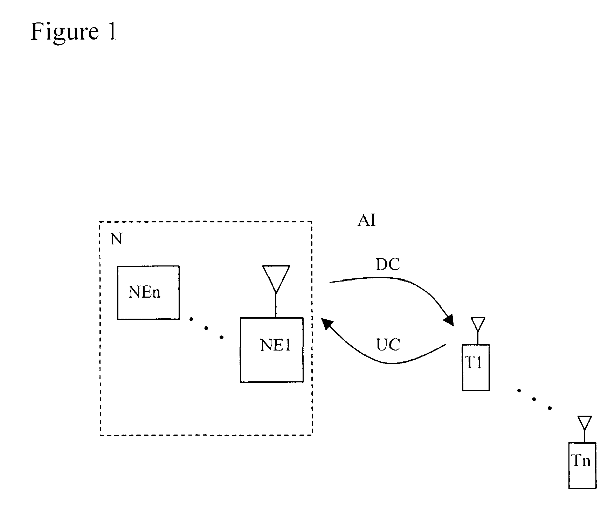

Figure 1 shows a block diagram of a wireless communications system in which a mobile radio network N, including a plurality of network elements NE1 to NEn, and a plurality of user terminals or UEs T1 to Tn exchange data information via a radio air interface AI downlink channel DC and an uplink channel UC. The network elements NE1 to NEn can be for example base stations or Node Bs, radio network controllers RNCs, core network switches, or any other communication elements which are generally used for wireless mobile communications. In case, for example, of a wireless communications system providing MBMS services, the mobile network comprises also a Broadcast-Multicast service center which transmits data to be broadcasted/multicasted over the mobile network N to an RNC. The RNC will then transmit the MBMS data to the Node Bs connected thereto, which will finally broadcast/multicast the data over the radio air interface AI in the cell region managed by said Node Bs to the UEs requesting the MBMS service.

MBMS comprises broadcast and multicast services. The broadcast service is intended for a large number of UEs which desire to receive the contents of the service independently of the nature of the contents. The multicast service is intended for a specific group of UEs which desire to receive a certain content. In the following description when referring to an MBMS service it is understood any one of the above named MBMS services. It will be also understood that the UEs requesting a MBMS service desire to receive the same MBMS service and the problem to be solved is the transmission of the same content to a group of UEs in a cellular system using the radio air interface AI resources in an efficient way.

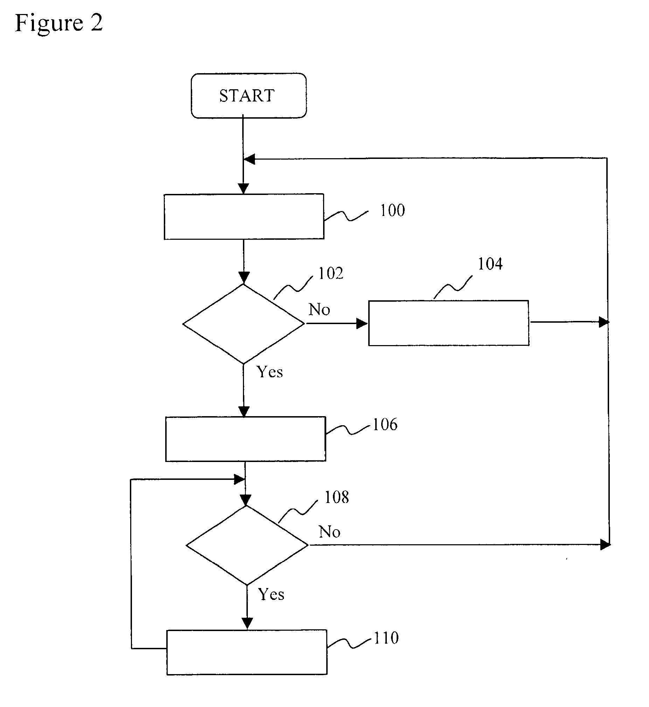

Figure 2 is a flow chart illustrating an operating process of a mobile network N as described in Figure 1 for providing an MBMS service based on the location and number of target UEs in a cell, according to a first embodiment of the invention.

In a first step 100, the mobile network counts the number of UEs requesting a MBMS service in a cell, and in the subsequent step 102 the mobile network compares such number with a preset value, which could be for example three. This preset value can be determined by the operator of the mobile network depending on radio cell planning calculations.

If the condition of step 102 is not met, that is, the number of UEs requesting a MBMS service in a cell is less than the preset value e.g. three, then the mobile network selects a point to point on dedicated channels transmission mode and proceeds with step 104 by using a point to point on dedicated channels transmission mode for delivering MBMS data to these UEs, e.g. two UEs would receive the same content from the mobile network through a dedicated channel for each one of them at this point. After step 104 the mobile network will continue with the start of the MBMS provision method to detect if the number of UEs requesting the MBMS service changes.

On the other hand, if the condition of step 102 is met, that is, the number of UEs requesting a MBMS service in a cell is equal or greater than the preset value, e.g. three, then the mobile network selects a point to multipoint on a common channel transmission mode and proceeds with step 106 by using a point to multipoint transmission mode on a common channel. According also to the invention, the mobile network in step 106 transmits on the common transport channel with a preset amount of power. The preset amount of transmission power for the common transport channel can be determined by the operator of the mobile network based on radio cell planning calculations and is preferably set to a value less than the amount of transmission power needed to cover the whole base station cell area. By doing this, the MBMS transmission will cover all the UEs located inside a certain cell inner area near to the base station, this area being preferably smaller than the cell area, and will not cover or will reach with very few power the UEs located in the cell but outside this cell inner area. The size of the cell inner area is the size of the area covered by the point to multipoint on a common transport channel transmission and it directly depends on the transmission power used for the common transport channel, that is said preset amount of power being used in step 106.

The UEs located outside the MBMS point to multipoint on a common transport channel coverage area, if any, will not receive the MBMs data or will receive it with a quality level lower than the required for the reception of data. For this reason, the mobile network in step 108 looks for UEs located in the cell which do not receive or which receive the MBMS service content with low service quality. If in step 108 the mobile network does not detect any UE receiving low MBMS service quality, it will proceed with the start of the MBMS provision method to detect if the number and location of UEs requesting the MBMS service changes.

On the other hand, if in step 108 the mobile network detects any UE receiving low MBMS service quality it will select a point to point on dedicated transport channels transmission mode and will follow the method with step 110 by using a point to point on dedicated channel transmission mode for this particular UE reporting low MBMS service quality. The mobile network repeats steps 108 and 110 until there is no UE in the cell receiving low service quality.

Of course, it is understood that the first embodiment of the method for providing an MBMS service as above described shall not necessarily comprise all the steps. For example, it can be preferred to provide the MBMS service just by using steps 106, 108 and 110, independently of the number of UEs in the cell desiring to receive the MBMS service.

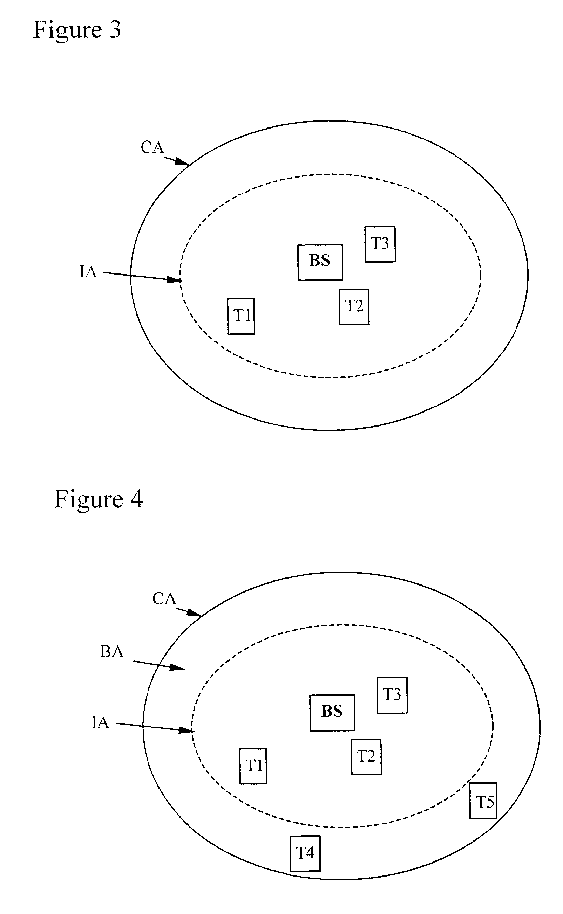

Figure 3 schematically illustrates a first example of an MBMS service provision method in a cell area CA according to a first embodiment of the invention. A mobile network N as described in Figure 1 comprises a base station BS in charge of delivering MBMS service data over the radio air interface cell area CA to three UEs T1 to T3 desiring to receive the MBMS service.

The mobile network operates according to the invention as described in Figure 2 for providing an MBMS service based on the location and number of target UEs T1 to T3 in the cell area CA. When the mobile network compares in step 102 of Figure 2 the number of UEs in the cell area CA with a preset value e. g. being set to three, then it continues with step 106 of Figure 2 by using a point to multipoint on a common channel transmission mode for delivering the MBMS data to the three UEs T1 to T3, with a preset amount of transmission power for the common transport channel enough to cover UEs located inside a certain cell inner area IA. The cell inner area IA is the MBMS point to multipoint on common channel transmission coverage area and is preferably smaller than the cell area CA. Since in the example of Figure 3 all the UEs T1 to T3 receiving the MBMS service are located inside such cell inner area IA, they will receive the service with enough quality for reception. The mobile network in step 108 of Figure 2 will not detect any UE receiving low MBMS service quality and will proceed with the start of the MBMS service provision method to detect if the number and location of UEs requesting the MBMS service changes.

Figure 4 schematically illustrates a second example of an MBMS service provision method in a cell area CA according to a first embodiment of the invention. A mobile network N as described in Figure1 comprises a base station BS in charge of delivering MBMS service data over the radio air interface cell area CA to five UEs T1 to T5 desiring to receive the MBMS service.

The mobile network operates according to the invention as described in Figure 2 for providing an MBMS service based on the location and number of target UEs T1 to T5 in the cell area CA. When the mobile network compares in step 102 of Figure 2 the number of UEs in the cell area CA with a preset value e. g. being set to three, then it continues with step 106 of Figure 2 by using a point to multipoint on a common channel transmission mode for delivering the MBMS data to the five UEs T1 to T5, with a preset amount of transmission power for the common transport channel enough to cover UEs located inside a certain cell inner area IA. The cell inner area IA is the MBMS point to multipoint on common channel transmission coverage area and is preferably smaller than the cell area CA. Since in the example of Figure 4 only three UEs T1 to T3 are located inside such cell inner area IA, they will receive the service with enough quality for reception. On the other hand the rest of the UEs T4 and T5, located in a border area BA between the cell inner area IA and the outer border limit of the cell area CA, will not receive the MBMS data or receive it with low service quality. The mobile network in step 108 of Figure 2 will detect that there are UEs in the cell CA receiving low MBMS service quality and will proceed with step 110 of Figure 2 by using a point to point on dedicated channels transmission mode for these particular UEs T4 and T5 as long as there are no UEs receiving low service quality. After that, the mobile network will continue with the start of the MBMS service provision method to detect if the number and location of UEs requesting the MBMS service changes.

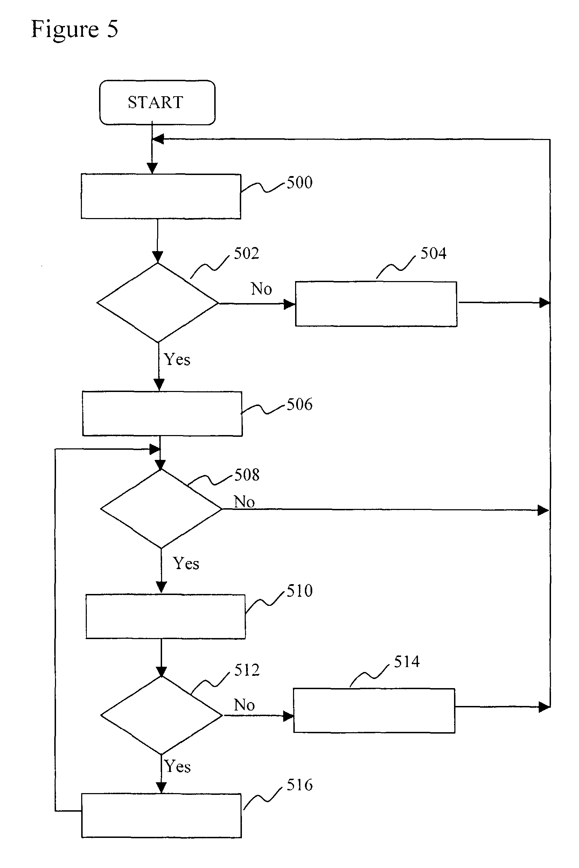

Figure 5 is a flow chart illustrating an operating process of a mobile network N as described in Figure 1 for providing an MBMS service based on the location and number of target UEs in a cell, according to a second embodiment of the invention.

In a first step 500, the mobile network counts the number of UEs requesting a MBMS service in a cell, and in the subsequent step 502 the mobile network compares such number with a first preset value, which could be for example three. This first preset value can be determined by the operator of the mobile network depending on radio cell planning calculations.

If the condition of step 502 is not met, that is, the number of UEs requesting a MBMS service in a cell is less than the first preset value e.g. three, then the mobile network selects a point to point on dedicated channels transmission mode and proceeds with step 504 by using a point to point on dedicated channels transmission mode for delivering MBMS data to these UEs, e.g. two UEs would receive the same content from the mobile network through a dedicated channel for each one of them at this point. After step 504 the mobile network will continue with the start of the MBMS service provision method to detect if the number of UEs requesting the MBMS service changes.

On the other hand, if the condition of step 502 is met, that is, the number of UEs requesting a MBMS service in a cell is equal or greater than the first preset value, e.g. three, then the mobile network selects a point to multipoint on a common channel transmission mode and proceeds with step 506 by using a point to multipoint on a common channel transmission mode for delivering MBMS data. According also to the invention, the mobile network in step 506 transmits on the common transport channel with a preset amount of transmission power. The preset amount of transmission power for the common transport channel can be determined by the operator of the mobile network based on radio cell planning calculations and is preferably set to a value less than the amount of transmission power needed to cover the whole base station cell area. By doing this, the MBMS transmission will cover all the UEs located inside a certain cell inner area near to the base station, this area being preferably smaller than the cell area, and will not cover or will reach with very few power the UEs located in the cell but outside this cell inner area. The size of the cell inner area is the size of the area covered by the point to multipoint on a common transport channel transmission and it directly depends on the transmission power used for the common transport channel, that is said preset amount of power being used in step 506.

The UEs located outside the MBMS point to multipoint on a common transport channel coverage area, if any, will not receive MBMS data or will receive it with a quality level lower than the required for the reception of data. For this reason, the mobile network in step 508 looks for UEs located in the cell which do not receive or which receive the MBMS service content with low service quality. If in step 508 the mobile network does not detect any UE receiving low MBMS service quality, it will proceed with the start of the MBMS provision method to detect if the number and location of the UEs requesting the MBMS service changes. On the other hand, if in step 508 the mobile network detects any UE receiving low MBMS service quality it will follow the method with step 510 by counting the number of UEs reporting low service quality.

The method continues with step 512 in which the mobile network compares that number of UEs receiving low MBMS service quality with a second preset value, which could be for example three. This second preset value can be determined by the operator of the mobile network depending on radio cell planning calculations. If the condition of step 512 is not met, that is, the number of UEs which experience low MBMS service quality in a cell is less than the second preset value e.g. three, then the mobile network selects a point to point on dedicated channels transmission mode and proceeds with step 514 by using a point to point on dedicated channels transmission mode for these particular UEs reporting low MBMS service quality. After step 514 the mobile network will continue with the start of the MBMS provision method to detect if the number and location of UEs requesting the MBMS service changes.

On the other hand, if the condition of step 512 is met, that is, the number of UEs receiving low MBMS service quality in a cell is equal or greater than the second preset value, e.g. three, then the mobile network selects an increment of transmission power and proceeds with step 516 by incrementing the transmission power for the common transport channel by a preset increment amount of transmission power. The preset increment amount of transmission power for incrementing the common transport channel transmission power can be determined also by the operator of the mobile network based on radio cell planning calculations and is preferably set to a value which added to the current value of transmission power used is less than the amount of transmission power needed to cover the whole base station cell area. By doing this, the size of the cell inner area is also incremented by a step directly depending on the common transport channel power increment. After step 516 the mobile network will continue with step 508 to detect the UEs receiving low service quality after the power increment. The increment of the transmission power for the common transport channel will be done in a successive manner until the conditions of steps 508 or 512 are not met.

Of course, it is understood that the second embodiment of the method for providing an MBMS service as above described shall not necessarily comprise all the steps. For example, it can be preferred to provide the MBMS service just by using steps 506, 508, 510, 512, 514 and 516.

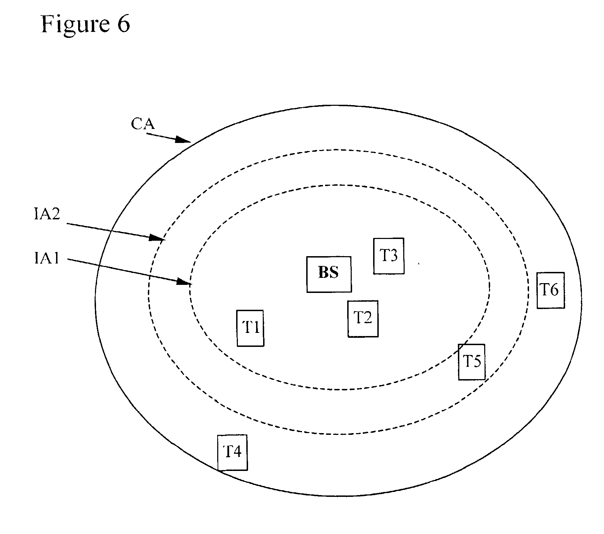

Figure 6 schematically illustrates an example of an MBMS service provision method in a cell area CA according to a second embodiment of the invention. A mobile network N as described in Figure 1 comprises a base station BS in charge of delivering MBMS service data over the radio air interface cell area CA to six UEs T1 to T6 desiring to receive the MBMS service.

The mobile network operates according to the invention as described in Figure 5 for providing an MBMS service based on the location and number of target UEs T1 to T6 in the cell area CA. When the mobile network compares in step 502 of Figure 5 the number of UEs in the cell area CA with a first preset value e. g. being set to three, then it continues with step 506 of Figure 5 by using a point to multipoint on a common channel transmission mode for delivering the MBMS data to the six UEs T1 to T6, with a preset amount of transmission power for the common transport channel enough to cover UEs located inside a certain first cell inner area IA1. The first cell inner area IA1 is the MBMS point to multipoint on common channel transmission coverage area and is preferably smaller than the cell area CA. Since in the example of Figure 6 three UEs T1 to T3 are located inside such first cell inner area IA1, these will receive the service with enough quality for reception. On the other hand the rest of the UEs T4 to T6, located outside the first cell inner area IA1 will not receive the MBMS data or receive it with low service quality. The mobile network in step 508 of Figure 5 detects that there are UEs receiving low MBMS service quality in the cell CA and continues with step 510 of Figure 5 to count the number of UEs receiving low service quality, which in the example of Figure 6 is three UEs T4 to T6. After that, the mobile network compares in step 512 of Figure 5 the number of UEs receiving low MBMS service quality in the cell with a second preset value e. g. being set to three, then it continues with step 516 of Figure 5 by incrementing the transmission power for the common transport channel by a preset increment amount of transmission power. By doing this, the size of the point to multipoint on a common channel transmission coverage area or first cell inner area IA1 is incremented to a second cell inner area IA2 now covering also another UE T5, which will receive the service on the common channel with enough quality for reception. Further, since in the example of Figure 6 two more UEs T4 and T6 are located outside the new point to multipoint on a common channel transmission coverage area or second cell inner area IA2, the mobile network in step 508 of

Figure 5 will detect that there are still UEs receiving low MBMS service quality and will count the number of them in step 510. The condition of step 512 of Figure 5 will not be met, since there are only two UEs T4 and T6 receiving low quality service and the it will proceed with step 514 of Figure 2 by using a point to point on dedicated channels transmission mode for these particular UEs T4 and T6. After that, the mobile network will continue with the start of the MBMS provision method in order to detect if the number and location of the UEs requesting the MBMS service changes.

For the sake of generalization, it is understood that the means to carry out the method or certain steps of the method for providing the MBMS service, in a wireless communications system with MBMS capability, herein described can be located anywhere in the mobile network, that is, in a base station, RNC or any network element or resource manager entity of the mobile network. Said means being implemented in hardware or software form. The mobile network can use its own means, or receive messages from the UEs, to detect if the UEs receive low MBMS service quality.

## Claims

1. Method for providing an MBMS service in a wireless communications system comprising a mobile network (N) communicating over a radio air interface (AI) with a plurality of UEs (T1 to Tn) desiring to receive the MBMS service in a cell (CA), the method comprising the steps of:
- using a point to multipoint on a common channel transmission mode with a preset amount of transmission power set to a value less than the amount of transmission power needed to cover the whole cell area (106, 506);
- detecting if there are UEs in the cell (CA) which receive low MBMS service quality with said point to multipoint on a common channel transmission with a preset amount of transmission power (108, 508); and
- using a point to point on dedicated channels transmission mode for such detected UEs (110, 514).

2. The method for providing an MBMS service of claim 1 further comprising the steps of:
- counting the number of UEs desiring to receive the MBMS service in the cell (100, 500);
- comparing said counted number of UEs with a first preset value and selecting a point to multipoint on a common channel transmission mode if said counted number of UEs in the cell (CA) is equal or greater than said preset value (102, 502).

3. The method for providing an MBMS service of claim 2 further comprising:
- selecting a point to point on dedicated channels transmission mode if the counted number of UEs in the cell (CA) is less than said first preset value (102, 502); and
- using a point to point on dedicated channels transmission mode for the UEs in the cell (104, 504).

4. The method for providing an MBMS service of claim 1 further comprising, between detecting if there are UEs in the cell (CA) which receive low MBMS service quality with said point to multipoint on a common channel transmission with a preset amount of transmission power (108, 508), and using a point to point on dedicated channels transmission mode for such detected UEs (110, 514):
- counting the number of such detected UEs in the cell (CA) receiving low MBMS service quality (510);
- comparing said counted number of UEs in the cell (CA) receiving low MBMS service quality with a second preset value and selecting an increment of transmission power if such counted number of UEs in the cell (CA) receiving low MBMS service quality is equal or greater than said second preset value (512);
- incrementing the amount of transmission power for the point to multipoint on a common channel transmission mode with a preset increment amount of transmission power (516).
as long as the mobile network (N) detects UEs in the cell (CA) which receive low MBMS service quality with the point to multipoint on a common channel transmission mode with a preset amount of transmission power (108, 508) and the counted number of UEs in the cell (CA) receiving low MBMS service quality is equal or greater than said second preset value (512).

5. A network element of a mobile network (N), such as a base station or the like, comprising means for communicating over a radio air interface (Al) with a plurality of UEs (T1 to Tn) desiring to receive an MBMS service in a cell (CA), the network element adapted to:
- use a point to multipoint on a common channel transmission mode with a preset amount of transmission power set to a value less than the amount of transmission power needed to cover the whole cell area (106, 506);
- detect if there are UEs in the cell (CA) which receive low MBMS service quality with said point to multipoint on a common channel transmission with a preset amount of transmission power (108, 508); and
- use a point to point on dedicated channels transmission mode for such detected UEs receiving low MBMS service quality with said point to multipoint on a common channel transmission with a preset amount of transmission power (110, 514).

6. The network element of claim 5 further adapted to:
- count the number of UEs desiring to receive the MBMS service in the cell (100, 500);
- compare said counted number of UEs with a first preset value and select a point to multipoint on a common channel transmission mode if said counted number of UEs in the cell (CA) is equal or greater than said first preset value (102, 502).

7. The network element of claim 6 further adapted to:
- select a point to point on dedicated channels transmission mode if the counted number of UEs in the cell (CA) is less than said first preset value (102, 502); and
- use a point to point on dedicated channels transmission mode for the UEs in the cell (104, 504).

8. The network element of claim 5 further adapted to:
- count the number of such detected UEs in the cell (CA) receiving low MBMS service quality (510);
- compare said counted number of UEs in the cell (CA) receiving low MBMS service quality with a second preset value and select an increment of transmission power if such counted number of UEs in the cell (CA) receiving low MBMS service quality is equal or greater than said second preset value (512);
- increment the amount of transmission power for the point to multipoint on a common channel transmission mode with a preset increment amount of transmission power (516).
as long as the mobile network (N) detects UEs in the cell (CA) which receive low MBMS service quality with the point to multipoint on a common channel transmission mode with a preset amount of transmission power (108, 508) and the counted number of UEs in the cell (CA) receiving low MBMS service quality is equal or greater than said second preset value (512).

9. A communications network (N) comprising a network element according to claim 5.

## Patentansprüche

1. Verfahren zur Bereitstellung eines MBMS-Dienstes in einem drahtlosen Kommunikationsnetz, das ein Mobilfunknetz (N) umfasst, das über eine Funkschnittstelle (AI) mit einer Vielzahl von UEs (T1 bis Tn) kommuniziert, die den MBMS-Dienst in einer Zelle (CA) empfangen wollen, wobei das Verfahren die folgenden Schritte umfasst:
- Einsatz eines Punkt-zu-Mehrpunkt-Übertragungsmodus über einen gemeinsamen Kanal mit Übertragungsleistung in vordefinierter Höhe, die auf einen Wert eingestellt wird, der unter dem Wert für die Übertragungsleistung liegt, die erforderlich ist, um den gesamten Zellenbereich abzudecken (106; 506);
- Ermittlung, ob in der Zelle (CA) UEs vorhanden sind, die mit der Punkt-zu-Mehrpunkt-Übertragung über einen gemeinsamen übertragungskanal mit Übertragungsleistung in vordefinierter Höhe in geringer MBMS-Dienstgüte empfangen (108; 508); und
- Einsatz eines Punkt-zu-Punkt-Übertragungsmodus über dedizierte Kanäle für die erfassten UES (110, 514).

2. Das Verfahren zur Bereitstellung eines MBMS-Dienstes gemäß Anspruch 1, das außerdem die folgenden Schritte umfasst:
- Zählen der Anzahl an UEs, die in der Zelle den MBMS-Dienst empfangen wollen (100, 500);
- Vergleich der genannten, gezählten Anzahl an UEs mit einem ersten vordefinierten Wert und Auswahl eines Punkt-zu-Mehrpunkt-Übertragungsmodus über einen gemeinsamen Kanal, wenn die genannte, gezählte Anzahl an UEs in der Zelle (CA) gleich oder größer ist als der genannte vordefinierte Wert (102; 502).

3. Das Verfahren zur Bereitstellung eines MBMS-Dienstes gemäß Anspruch 2, das außerdem umfasst:
- Auswahl eines Punkt-zu-Punkt-Übertragungsmodus über dedizierte Kanäle, wenn die gezählte Anzahl an UEs in der Zelle (CA) unter dem genannten ersten vordefinierten Wert liegt (102; 502); und
- Einsatz eines Punkt-zu-Punkt-Übertragungsmodus über dedizierte Kanäle für die UEs in der Zelle (104, 504).

4. Das Verfahren zur Bereitstellung eines MBMS-Dienstes gemäß Anspruch 1, das zwischen der Erfassung, ob in der Zelle (CA) UEs vorhanden sind, die mit der Punkt-zu-Mehrpunkt-Übertragung über einen gemeinsamen Kanal mit Übertragungsleistung in vordefinierter Höhe in geringer MBMS-Dienstgüte empfangen (108, 508), und dem Einsatz eines Punkt-zu-Punkt-Übertragungsmodus über dedizierte Kanäle für die erfassten UEs (110, 514) außerdem umfasst:
- Zählen der Anzahl an erfassten UEs in der Zelle (CA), die in geringer MBMs-Dienstgüte empfangen (510);
- Vergleich der genannten, gezählten Anzahl an UEs in der Zelle (CA), die in geringer MBMS-Dienstgüte empfangen, mit einem zweiten vordefinierten Wert und Auswahl eines Inkrementalwertes für die Übertragungsleistung, wenn die gezählte Anzahl an UEs in der Zelle (CA), die in geringer MBMa-Dienstgüte empfangen, gleich oder größer ist als der genannte zweite vordefinierte Wert (512);
- Erhöhung der Übertragungsleistung für den Punkt-zu-Mehrpunkt-Übertragungsmodus über einen gemeinsamen Kanal um einen vordefinierten Inkrementalwert für die Übertragungsleistung (516),
so lange das Mobilfunknetz (N) in der Zelle (CA) UEs erfasst, die mit dem Punkt-zu-Mehrpunkt-Übertragungsmodus über einen gemeinsamen Kanal mit einer Übertragungsleistung in vordefinierter Höhe in geringer MBMs-Dienstgüte empfangen (108, 508) und die gezählte Anzahl an UEs in der Zelle (CA), die in geringer MBMS-Dienstgüte empfangen, gleich oder größer ist als der genannte zweite vordefinierte Wert (512).

5. Ein Netzelement für ein Mobilfunknetz (N), wie z.B, eine Basisstation oder Ähnliches, das Mittel zur Kommunikation über eine Funkschnittstelle (AI) mit einer Vielzahl an UEs (T1 bis Tn) umfasst, die in einer Zelle (CA) einen MBMS-Dienst empfangen wollen, wobei das Netzelement in der Lage ist:
- einen Punkt-zu-Mehrpunkt-Übertragungsmodus über einen gemeinsamen Kanal mit einer Übertragungsleistung in vordefinierter Höhe einzusetzen, die auf einen Wert eingestellt ist, der unter dem Wert für die Übertragungsleistung liegt, der erforderlich ist, um den gesamten Zellenbereich abzudecken (106; 506);
- zu ermitteln, ob in der Zelle (CA) UEs vorhanden sind, die mit der genannten Punkt-zu-Mehrpunkt-Übertragung über einen gemeinsamen Kanal mit einer Übertragungsleistung in vordefinierter Höhe in geringer Dienstgüte empfangen (108, 508); und
- für die auf diese Weise erfassten UEs, die mit der genannten Punkt-zu-Mehrpunkt-Übertragung über einen gemeinsamen Kanal mit einer Übertragungsleistung in vordefinierter Höhe in geringer MBMs-Dienstgüte empfangen, einen Punkt-zu-Punkt-Übertragungsmodus über dedizierte Kanäle einzusetzen (110; 514).

6. Das Netzelement gemäß Anspruch 5, das außerdem in der Lage ist:
- die Anzahl an UEs zu zählen, die in der Zelle den MBMS-Dienst empfangen wollen (100, 500);
- die genannte, gezählte Anzahl an UEs mit einem ersten vordefinierten Wert zu vergleichen und einen Punkt-zu-Mehrpunkt-Übertragungsmodus über einen gemeinsamen Kanal auszuwählen, wenn die genannte, gezählte Anzahl an UEs in der Zelle (CA) gleich oder größer ist als der genannte erste vordefinierte Wert (102, 502).

7. Das Netzelement gemäß Anspruch 6, das außerdem in der Lage ist:
- einen Punkt-zu-Punkt-Übertragungsmodus über dedizierte Kanäle zu wählen, wenn die gezählte Anzahl an UEs in der Zelle (CA) unter dem genannten ersten vordefinierten Wert liegt (102, 502); und
- einen Punkt-zu-Punkt-Übertragungsmodus über dedizierte Kanäle für die UEs in der Zelle (CA) einzusetzen.

8. Das Netzelement gemäß Anspruch 5, das außerdem in der Lage ist:
- die Anzahl an erfassten UEs in der Zelle (CA) zu zählen, die in geringer MBMs-Dienstgüte empfangen (510);
- die genannte, gezählte Anzahl an UEs in der Zelle (CA), die in geringer MBMS-Dienstgüte empfangen, mit einem zweiten vordefinierten Wert zu vergleichen und einen Inkrementalwert für die Übertragungsleistung zu wählen, wenn diese gezählte Anzahl an UEs in der Zelle (CA), die in geringer MBMS-Dienstgüte empfangen, gleich oder größer ist als der genannte zweite vordefinierte Wert (512);
- die Höhe der Übertragungsleistung für den Punkt-zu-Mehrpunkt-Übertragungsmodus über einen gemeinsamen Kanal um einen vordefinierten Inkrementalwert für die Übertragungsleistung zu erhöhen (516),
so lange das Mobilfunknetz (N) in der Zelle (CA) UEs erfasst, die mit dem Punkt-zu-Mehrpunkt-Übertragungsmodus über einen gemeinsamen Kanal mit einer Übertragungsleistung in vordefinierter Höhe in geringer MBMS-Dienstgüte empfangen (108, 508) und die gezählte Anzahl an UEs in der Zelle (CA), die in geringer MBMS-Dienstgüte empfangen, gleich oder größer ist als der genannte zweite vordefinierte Wert (512).

9. Ein Kommunikationsnetz (N), das ein Netzelement gemäß Anspruch 5 umfasst.

## Revendications

1. Procédé pour fournir un service MBMS dans un système de communications sans fil comprenant un réseau mobile (N) communiquant sur une interface air radio (AI) avec une pluralité d'UEs (T1 à Tn) souhaitant recevoir le service MBMS dans une cellule (CA), le procédé comprenant les étapes consistant à :
- utiliser un mode de transmission point à multipoint sur un canal commun avec une quantité de puissance de transmission prédéfinie établie à une valeur inférieure à la quantité de puissance de transmission nécessaire pour couvrir toute la zone cellulaire (106, 506);
- détecter s'il y a des UEs dans la cellule (CA) qui reçoivent une faible qualité de service MBMS avec ladite transmission point à multipoint sur un canal commun avec une quantité de puissance de transmission prédéfinie (108, 508) ; et
- utiliser un mode de transmission point à point sur des canaux dédiés pour de tels UEs détectés (110, 514).

2. Procédé pour fournir un service MBMS selon la revendication 1, comprenant en outre les étapes consistant à :
- compter le nombre d'UEs souhaitant recevoir le service MBMS dans la cellule (100, 500) ;
- comparer ledit nombre compté d'UEs avec une première valeur prédéfinie et sélectionner un mode de transmission point à multipoint sur un canal commun si ledit nombre compté d'UEs dans la cellule (CA) est égal ou supérieur à ladite valeur prédéfinie (102, 502).

3. Procédé pour fournir un service MBMS selon la revendication 2, comprenant en outre :
- la sélection d'un mode de transmission point à point sur des canaux dédiés si le nombre compté d'UEs dans la cellule (CA) est inférieur à ladite première valeur prédéfinie (102, 502) ; et
- l'utilisation d'un mode de transmission point à point sur des canaux dédiés pour les UEs dans la cellule (104, 504).

4. Procédé pour fournir un service MBMS selon la revendication 1, comprenant en outre, entre la détection de UEs dans la cellule (CA) qui reçoivent une faible qualité de service MBMS avec ladite transmission point à multipoint sur un canal commun avec une quantité de puissance de transmission prédéfinie (108, 508), et l'utilisation d'un mode de transmission point à point sur des canaux dédiés pour de tels UEs détectés (110, 514) :
- le comptage du nombre de tels UEs détectés dans la cellule (CA) recevant une faible qualité de service MBMS (510) ;
- la comparaison dudit nombre compté d'UEs dans la cellule (CA) recevant une faible qualité de service MBMS avec une seconde valeur prédéfinie et la sélection d'un incrément de puissance de transmission si un tel nombre compté d'UEs dans la cellule (CA) recevant une faible qualité de service MBMS est égal ou supérieur à ladite seconde valeur prédéfinie (512) ;
- l'incrémentation de la quantité de puissance de transmission pour le mode de transmission point à multipoint sur un canal commun avec un incrément de quantité de puissance de transmission prédéfinie (516)
à condition que le réseau mobile (N) détecte des UEs dans la cellule (CA) qui reçoivent une faible qualité de service MBMS avec le mode de transmission point à multipoint sur un canal commun avec une quantité de puissance de transmission prédéfinie (108, 508) et que le nombre compté d'UEs dans la cellule (CA) recevant une faible qualité de service MBMS soit égal ou supérieur à ladite seconde valeur prédéfinie (512).

5. Elément de réseau d'un réseau mobile (N), comme une station de base ou similaire, comprenant un moyen pour communiquer sur une interface air radio (AI) avec une pluralité d'UEs (T1 à Tn) souhaitant recevoir un service MBMS dans une cellule (CA), l'élément de réseau étant adapté pour :
- utiliser un mode de transmission point à multipoint sur un canal commun avec une quantité de puissance de transmission prédéfinie établie à une valeur inférieure à la quantité de puissance de transmission nécessaire pour couvrir toute la zone cellulaire (106, 506) ;
- détecter s'il y a des UEs dans la cellule (CA) qui reçoivent une faible qualité de service MBMS avec ladite transmission point à multipoint sur un canal commun avec une quantité de puissance de transmission prédéfinie (108, 508) ; et
- utiliser un mode de transmission point à point sur des canaux dédiés pour de tels UEs recevant une faible qualité de service MBMS avec ladite transmission point à multipoint sur un canal commun avec une quantité de puissance de transmission prédéfinie (110, 514).

6. Elément de réseau selon la revendication 5, adapté en outre pour :
- compter le nombre d'UEs souhaitant recevoir le service MBMS dans la cellule (100, 500) ;
- comparer ledit nombre compté d'UEs avec une première valeur prédéfinie et sélectionner un mode de transmission point à multipoint sur un canal commun si ledit nombre compté d'UEs dans la cellule (CA) est égal ou supérieur à ladite première valeur prédéfinie (102, 502).

7. Elément de réseau selon la revendication 6, adapté en outre pour :
- sélectionner un mode de transmission point à point sur des canaux dédiés si le nombre compté d'UEs dans la cellule (CA) est inférieur à ladite première valeur prédéfinie (102, 502) ; et
- utiliser un mode de transmission point à point sur des canaux dédiés pour les UEs dans la cellule (104, 504).

8. Elément de réseau selon la revendication 5, adapté en outre pour :
- compter le nombre de tels UEs détectés dans la cellule (CA) recevant une faible qualité de service MBMS (510) ;
- comparer ledit nombre compté d'UEs dans la cellule (CA) recevant une faible qualité de service MBMS avec une seconde valeur prédéfinie et sélectionner un incrément de puissance de transmission si un tel nombre compté d'UEs dans la cellule (CA) recevant une faible qualité de service MBMS est égal ou supérieur à ladite seconde valeur prédéfinie (512) ;
- incrémenter la quantité de puissance de transmission pour le mode de transmission point à multipoint sur un canal commun avec un incrément de quantité de puissance de transmission prédéfinie (516)
à condition que le réseau mobile (N) détecte des UEs dans la cellule (CA) qui reçoivent une faible qualité de service MBMS avec le mode de transmission point à multipoint sur un canal commun avec une quantité de puissance de transmission prédéfinie (108, 508) et que le nombre compté d'UEs dans la cellule (CA) recevant une faible qualité de service MBMS soit égal ou supérieur à ladite seconde valeur prédéfinie (512).

9. Réseau de communications (N) comprenant un élément de réseau selon la revendication 5.
